# EUROPEAN PATENT APPLICATION

(11) **EP 3 564 738 A1**
(43) Date of publication of application: **06.11.2019**
(21) Application number: 19172480.6
(22) Date of filing: 03.05.2019
(51) Int. Cl.: G02F 1/1333

(54) **DISPLAY DEVICE INCLUDING A PROTRUSION ON THE BACK OF THE DISPLAY PANEL FOR CONNECTING A FRAME**

(30) Priority: 04.05.2018 KR 20180051960
(71) Applicant: Samsung Display Co., Ltd., Gyeonggi-do 17113 (KR)
(72) Inventor: KIM, Yongil, Gyeonggi-Do (KR); JUNG, Minsu, Gyeonggi-Do (KR)
(74) Representative: Taor, Simon Edward William

(57) **Abstract**

A display device includes a display panel having a display region and a non-display region adjacent to the display region. The display panel includes a pixel disposed within the display region. A backlight unit is configured to provide light to the display panel. A mold frame is disposed between the display panel and the backlight unit. The mold frame supports the display panel. The mold frame includes an extended portion at least partially overlapping the non-display region, a supporting portion extending from the extended portion, the supporting portion defining an opening at least partially overlapping the display region, and a containing hole. A guide member is disposed between the display panel and the mold frame. An adhesive member attaches the guide member to the display panel. The guide member is disposed within the containing hole and is more rigid than the adhesive member.

## Description

### TECHNICAL FIELD

The present disclosure relates to a display device, and in particular, to a display device including a rigid guide member.

### DISCUSSION OF THE RELATED ART

A display device is a device that produces an image to be viewed by a user. Display devices may be used in various products from small wearable devices to large billboards. For example, display devices are commonly used in television sets. There is an increasing demand for a large-size display device such as those used in television sets. However, as the size of the display device increases, the components constituting the display device also increase in size.

Display devices that have a resolution sufficient to produce a highly realistic image, even at close distances, are known as high-definition display devices. In high-definition display devices, a shape or structure of the display module may be variously changed, depending on a way of interconnecting a display panel to a driving circuit. For example, traditionally the driving circuits of the display devices would be disposed on peripheral edges of the display panel, giving the display device the appearance of a large frame or bezel that is incapable of displaying an image. To make the device look more desirable, the driving circuits may be repositioned behind the display panel or may be otherwise disposed in a less conspicuous manner. Furthermore, various adhesive elements may be used to attach a display module to a mold frame, and in this case, assembling the display module to the mold frame may be complicated by the arrangement of the display module and the characteristics of the adhesive elements.

### SUMMARY

A display device includes a display panel having a display region and a non-display region adjacent to the display region. The display panel includes a pixel disposed within the display region. A backlight unit is configured to provide light to the display panel. A mold frame is disposed between the display panel and the backlight unit. The mold frame supports the display panel. The mold frame includes an extended portion at least partially overlapping the non-display region, a supporting portion extending from the extended portion, the supporting portion defining an opening at least partially overlapping the display region, and a containing hole. A guide member is disposed between the display panel and the mold frame. An adhesive member attaches the guide member to the display panel. The guide member is disposed within the containing hole and is more rigid than the adhesive member.

A display device includes a display module having a display panel and a driving circuit. The display panel includes a display region and a non-display region adjacent to the display region. The driving circuit is connected to a side region of the display panel. A mold frame at least partially overlaps the non-display region and supports the display module. The mold frame includes a containing hole facing the display panel. A guide member is coupled to the display panel. The guide member is disposed within the containing hole and is at least partially overlapped by the driving circuit.

According to an aspect, there is provided a display device as set out in claim 1. Preferred features are set out in claims 2 to 13. According to an aspect, there is provided a display device as set out in claim 14. Preferred features are set out in claim 15.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
FIG. 1A is a perspective view illustrating an assembled structure of a display device according to an exemplary embodiment of the present inventive concept;
FIG. 1B is a perspective view illustrating an exploded structure of a display device according to an exemplary embodiment of the present inventive concept;
FIG. 1C is an equivalent circuit diagram of a pixel according to an exemplary embodiment of the present inventive concept;
FIG. 2 is a cross-sectional view of a display device, taken along line I-I' of FIG. 1A;
FIG. 3A is an exploded perspective view illustrating some elements of a display device according to an exemplary embodiment of the present inventive concept;

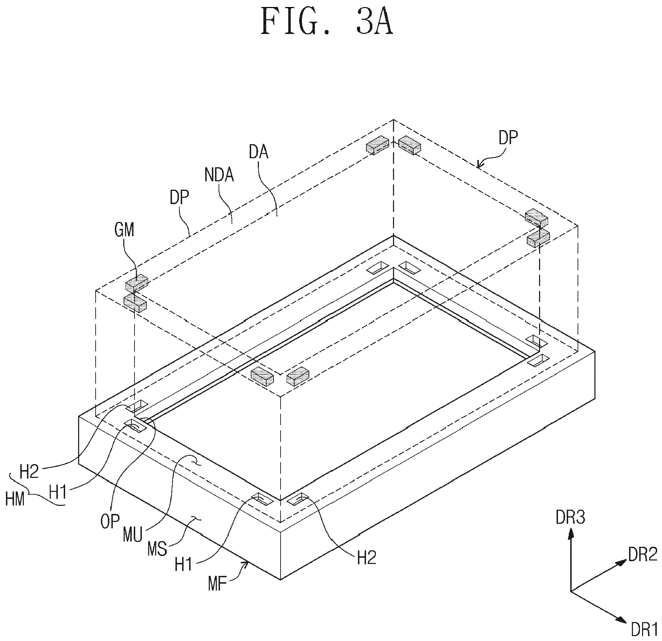

FIG. 3A is an exploded perspective view illustrating some elements of a display device according to an exemplary embodiment of the present inventive concept;

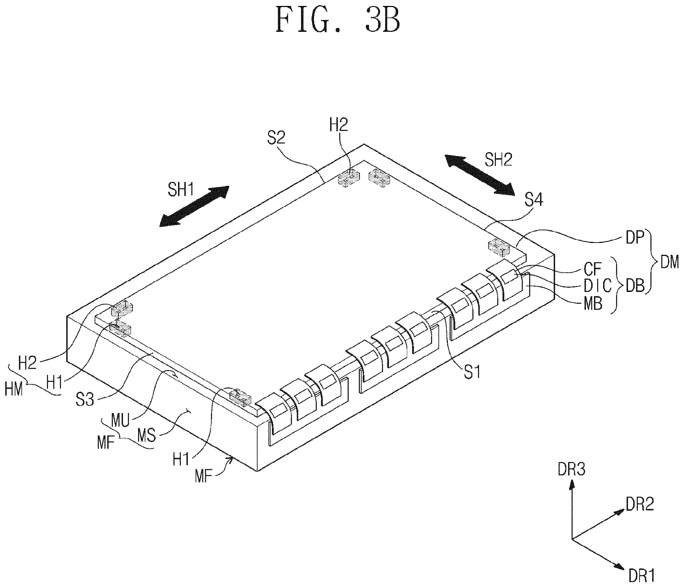

FIG. 3B is an exploded perspective view illustrating some elements of a display device according to an exemplary embodiment of the present inventive concept;

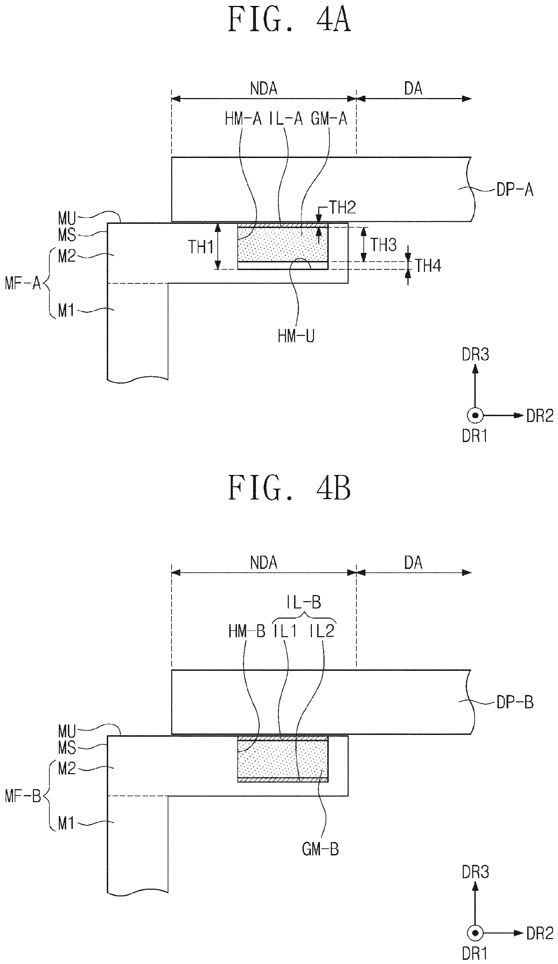

FIGS. 4A to 4E are cross-sectional views each illustrating some elements of a display device according to an exemplary embodiment of the present inventive concept;

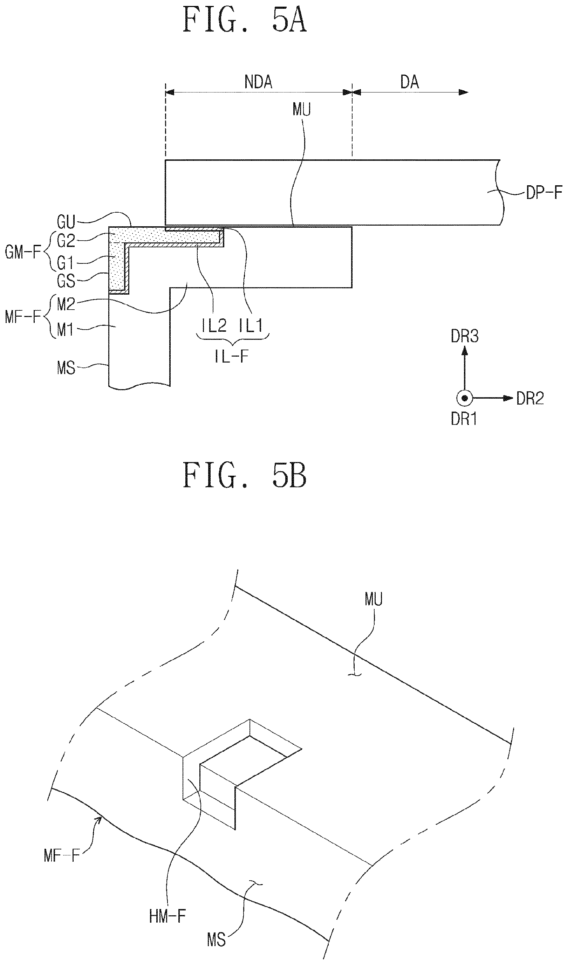

FIG. 5A is a cross-sectional view illustrating some elements of a display device according to an exemplary embodiment of the present inventive concept;
FIG. 5B is an enlarged view illustrating a portion of FIG. 5A; and

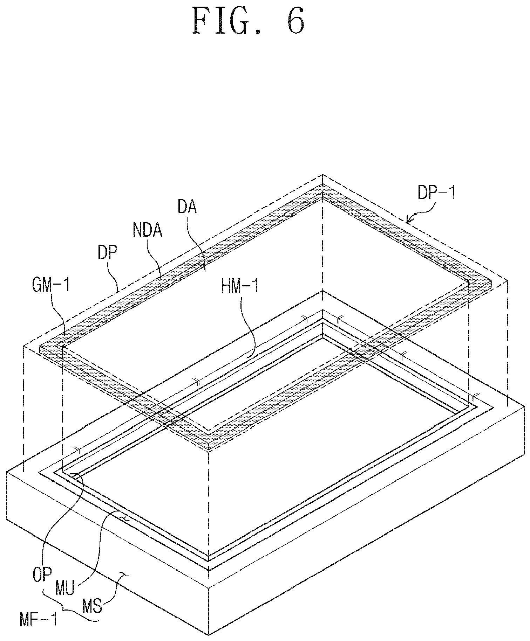

FIG. 6 is a perspective view illustrating some elements of a display device according to an exemplary embodiment of the present inventive concept.

### DETAILED DESCRIPTION

Exemplary embodiments of the present inventive concepts will now be described more fully with reference to the accompanying drawings. Exemplary embodiments of the present inventive concepts may, however, be embodied in many different forms and should not be construed as being limited to the embodiments set forth herein; rather, these embodiments are provided so that this disclosure will be thorough and complete, and will fully convey the concept of exemplary embodiments to those of ordinary skill in the art. In the drawings, the thicknesses of layers and regions may be exaggerated for clarity. Like reference numerals may denote like elements throughout the specification and drawings.

It will be understood that when an element is referred to as being "connected" or "coupled" to another element, it can be directly connected or coupled to the other element or intervening elements may be present.

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present disclosure.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

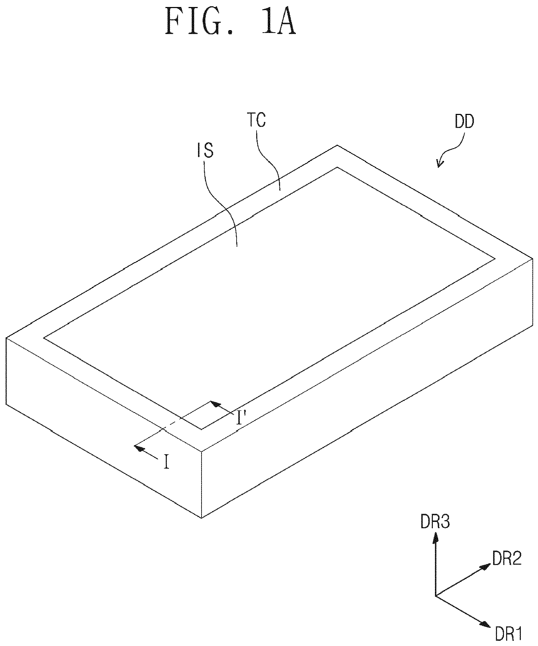

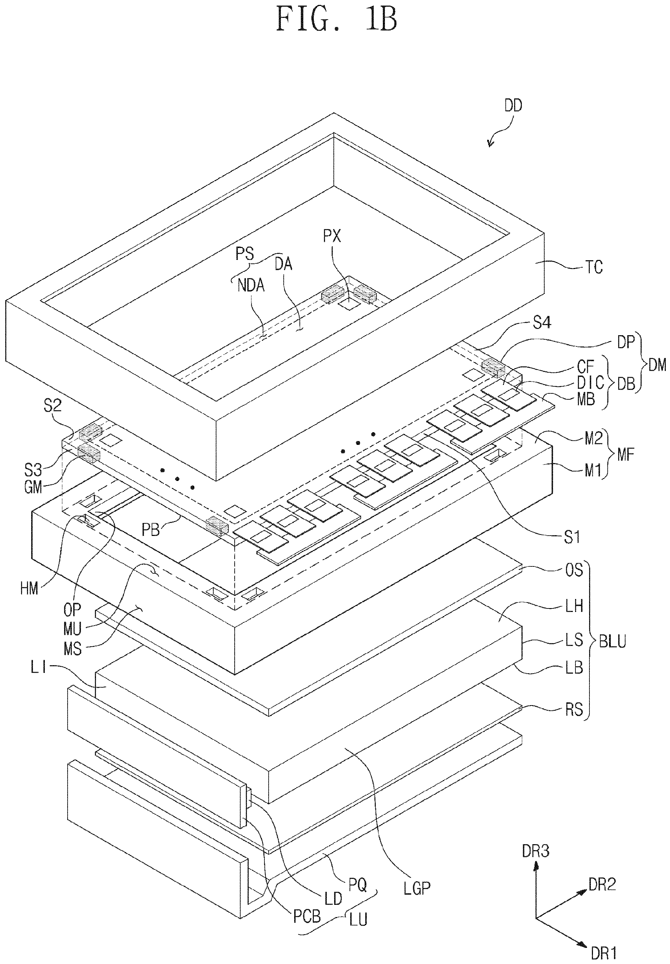

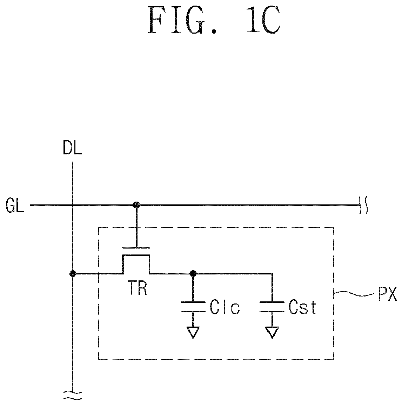

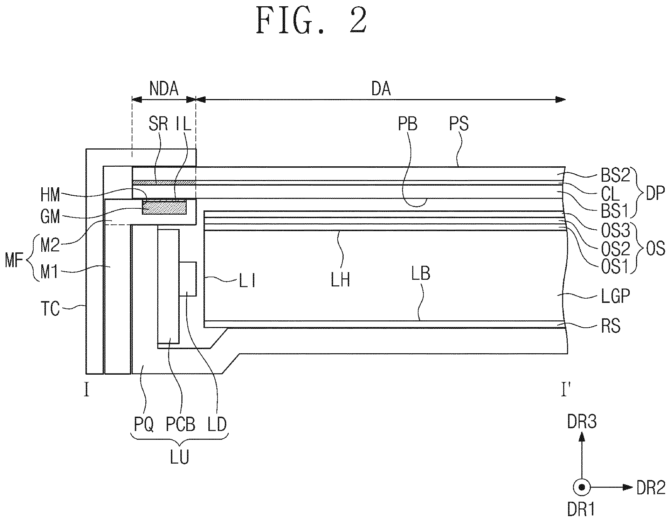

FIG. 1A is a perspective view illustrating an assembled structure of a display device according to an exemplary embodiment of the present inventive concept. FIG. 1B is a perspective view illustrating an exploded structure of a display device according to an exemplary embodiment of the present inventive concept. FIG. 1C is an equivalent circuit diagram of a pixel according to an exemplary embodiment of the present inventive concept. FIG. 2 is a cross-sectional view of a display device, taken along line I-I' of FIG. 1A. Hereinafter, a display device according to an exemplary embodiment of the present inventive concept will be described with reference to FIGS. 1A to 2.

Referring to FIG. 1A, a display device DD may include a display surface IS, which is used to display an image. In FIG. 1A, the display surface IS is illustrated to have a surface defined by first and second directions DR1 and DR2 crossing each other. However, embodiments of the inventive concept are not limited thereto, and the display surface IS of the display device DD may have a curved shape. The display device DD may be used for large-sized electronic devices (e.g., television sets, monitors, and outdoor billboards) or small- or medium-sized electronic devices (e.g., personal computers, notebook computers, personal digital assistants, car navigation systems, gaming consoles, portable electronic devices, and cameras). However, it should be understood that these are merely examples of the inventive concept, and that other electronic devices may be used to realize the inventive concept.

Hereinafter, a thickness direction of the display device DD will be referred to as a third direction DR3. A front or top surface and a rear or bottom surface of each member may be distinguished, based on the third direction DR3. However, directions indicated by the first to third directions DR1, DR2, and DR3 may be relative concepts, and in certain embodiments, they may be changed to indicate other directions.

Referring to FIG. 1B, the display device DD may include a display module DM, a top chassis TC, a backlight unit BLU, a mold frame MF, and a guide member GM. The display module DM may include a display panel DP and a driving circuit DB.

Embodiments of the inventive concept are not limited to a specific kind of the display panel DP, and for example, the display panel DP may be an organic light emitting display panel, a liquid crystal display panel, a plasma display panel, an electrophoretic display panel, and/or an electrowetting display panel.

The display panel DP may include a front surface PS, a rear surface PB, and a plurality of side surfaces S1, S3, S3, and S4. In the present embodiment, the front surface PS, the rear surface PB, and the side surfaces S1, S3, S3, and S4 may be connected to each other such that the display panel DP has a hexahedral shape. However, embodiments of the inventive concept are not limited to this example, and for example, the shape of the display panel DP may be variously changed.

The display panel DP may be configured to display an image on the front surface PS. The front surface PS may include a display region DA and a non-display region NDA. The display region DA may display an image. The non-display region NDA may be located adjacent to the display region DA and the non-display region NDA may at least partially surround the display region DA. The non-display region NDA may define an area and a shape of the display region DA. In an exemplary embodiment of the present inventive concept, the display region DA may correspond to the display surface IS. However, embodiments of the inventive concept are not limited to this example, and for example, the non-display region NDA may be omitted from the display panel DP.

The side surfaces S1, S2, S3, and S4 may run perpendicular to the third direction DR3 and may be connected to each other. The third direction DR3 may be the thickness direction of the display panel DP.

The first side surface S1 may extend primarily in the second direction DR2. The second side surface S2 may extend primarily in the second direction DR2 and may be spaced apart from the first side surface S1 in the first direction DR1. The third side surface S3 may extend primarily in the first direction DR1. The fourth side surface S4 may extend primarily in the first direction DR1 and may be spaced apart from the third side surface S3 in the second direction DR2. The third side surface S3 may connect adjacent ends of the first and second side surfaces S1 and S2, and the fourth side surface S4 may connect other adjacent ends of the first and second side surfaces S1 and S2.

The display panel DP may include a first substrate BS1, a second substrate BS2 facing the first substrate BS1, a seal member SR, and a liquid crystal layer CL interposed between the first and second substrates BS1 and BS2 and bound by the sealing member SR.

A top surface of the first substrate BS1 may include the front surface PS of the display panel DP. The driving circuit DB may be disposed near a side of the first substrate BS1. A bottom surface of the second substrate BS2 may include the rear surface PB of the display panel DP.

The seal member SR may have a specific thickness and may be disposed between the first and second substrates BS1 and BS2. The seal member SR may at least partially overlap the non-display region NDA, when viewed in a plan view.

The liquid crystal layer CL may be disposed between the first and second substrates BS1 and BS2. The liquid crystal layer CL may be disposed in a space, which is provided by the thickness of the seal member SR. The liquid crystal layer CL may include a plurality of liquid crystal molecules whose arrangement can be changed by an electric field applied thereto. A pair of polarization plates may be disposed on top and bottom surfaces of the display panel DP.

The driving circuit DB may include a circuit film CF, a driving chip DIC, and a circuit substrate MB. In an exemplary embodiment of the present inventive concept, a plurality of the driving circuits DB may be arranged along a side of the display panel DP. However, embodiments of the inventive concept are not limited to this example, and for example, the driving circuit DB may be a single structure, which is composed of one circuit film on driving chip and one circuit substrate.

The circuit film CF may be flexible and may include a plurality of circuit lines. The circuit film CF may be disposed at a side region of the front surface PS of the display panel DP. The circuit film CF may have various shapes, and the shape of the circuit film CF may be determined in consideration of the shape of the driving circuit DB.

The driving chip DIC may include a plurality of electronic devices. The driving chip DIC may be electrically connected to the circuit substrate MB and the display panel DP. The driving chip DIC may be configured to generate electrical signals or to process received electrical signals and then provide the processed electrical signals to the circuit substrate MB or the display panel DP. The driving chip DIC may be mounted on the circuit film CF in a chip-on-film (COF) manner. Accordingly, the driving chip DIC may be connected to the display panel DP through the circuit film CF. However, embodiments of the inventive concept are not limited to this example, and for example, the driving chip DIC may be directly mounted on the display panel DP.

The circuit substrate MB may be electrically connected to the circuit film CF. The circuit substrate MB may include a plurality of electronic devices, which are configured to generate or process electrical signals. The circuit substrate MB may communicate electrical signals with the display panel DP through the circuit film CF. The circuit substrate MB may be a flexible printed circuit board (FPCB).

The display panel DP may include a pixel PX connected to the driving circuit DB. Referring to FIG. 1C, the pixel PX may include a thin-film transistor TR (hereinafter, a transistor), a liquid crystal capacitor Clc, and a storage capacitor Cst. The liquid crystal capacitor Clc may be used as a display element, and the transistor TR and the storage capacitor Cst may be used as a pixel driving circuit. The numbers of the transistor TR and the storage capacitor Cst may vary depending on an operation mode of a liquid crystal display panel.

The liquid crystal capacitor Clc may be charged by a pixel voltage output from the transistor TR. An orientation of a liquid crystal director included in the liquid crystal layer CL may vary depending on an amount of charge stored in the liquid crystal capacitor Clc. For example, the liquid crystal director may be controlled by an electric field produced between two electrodes of the liquid crystal capacitor. Transmittance of light, which is incident into the liquid crystal layer CL, may vary depending on the orientation of the liquid crystal director. For example, depending on the orientation of the liquid crystal director, the light may pass through the liquid crystal layer CL or may be blocked by the liquid crystal layer CL.

The storage capacitor Cst may be connected in parallel to the liquid crystal capacitor Clc. The storage capacitor Cst may be configured to maintain the orientation or arrangement of the liquid crystal director for a predetermined period of time.

The top chassis TC may be disposed on the display panel DP. The top chassis TC may cover the non-display region NDA of the display panel DP. The top chassis TC may cover the mold frame MF. In an exemplary embodiment of the present inventive concept, the top chassis TC is illustrated as covering the entire region of the non-display region NDA, but embodiments of the inventive concept are not limited to this example. For example, the top chassis TC may cover only a portion of the display panel DP, on which the driving circuit DB is placed.

The backlight unit BLU may include a light source unit LU, a light guide plate LGP, optical sheets OS, and a reflection sheet RS. The backlight unit BLU may be disposed on the rear surface PB of the display panel DP.

The light source unit LU may include a light source LD, a printed circuit board PCB, and a containing member PQ. The light source LD may be mounted on the printed circuit board PCB and may receive a driving voltage from the printed circuit board PCB. When the driving voltage is supplied to the light source LD, the light source LD may generate light to be disposed toward the light guide plate LGP. The containing member PQ may be configured to support the light guide plate LGP. The containing member PQ may be disposed on a rear surface of the printed circuit board PCB and may exhaust heat, which is produced in the light source LD, to the outside. In certain cases, the containing member PQ may be omitted.

The light guide plate LGP may be configured to guide light, which is provided from the light source LD, toward the display panel DP. The light guide plate LGP may include a top surface LH, a bottom surface LB, and connecting surfaces LI and LS. In FIG. 1B, one of the connecting surfaces facing the light source LD may be illustrated as an incidence surface LI, and another of the connecting surfaces facing the incidence surface LI may be illustrated as an opposite surface LS. Light emitted from the light source LD may be incident into the incidence surface LI. The light, which is emitted from the light source LD and is incident into the incidence surface LI, may be emitted to the outside of the light guide plate LGP through the top surface LH.

Embodiments of the inventive concept are not particularly limited to a specific material of the light guide plate LGP. For example, the light guide plate LGP may be formed of or may otherwise include glass, polyamide, polymethyl methacrylate, methyl methacrylate-styrene, and/or polycarbonate.

As described above, the light source LD may be placed on one of side surfaces of the light guide plate LGP to provide light to the light guide plate LGP, but embodiments of the inventive concept are not limited to this example. For example, in an exemplary embodiment of the present inventive concept, the light source LD may be placed on at least two side surfaces of the light guide plate LGP. In an exemplary embodiment of the present inventive concept, the light source LD may be placed below the display panel DP to provide light to the display panel DP, and the light guide plate LGP may be omitted.

The optical sheets OS may be disposed between the light guide plate LGP and the display panel DP. The optical sheets OS may control a propagation path of light guided by the light guide plate LGP.

The optical sheets OS may include a diffusion sheet OS1, a prism sheet OS2, and a protection sheet OS3. The diffusion sheet OS1 may be configured to diffuse light, and the prism sheet OS2 may be configured to allow the diffused light, which is emitted from the diffusion sheet OS1, to be propagated in the thickness direction of the display panel DP or in a direction similar thereto. The prism sheet OS2 may include a plurality of prism sheets. The protection sheet OS3 may be configured to protect the prism sheet OS2 from an external impact. In the optical sheets OS, according to the present embodiments, each of the diffusion sheet OS1, the prism sheet OS2, and the protection sheet OS3 may be a single sheet, but embodiments of the inventive concept are not limited to this example. For example, in the optical sheets OS, according to an exemplary embodiment of the present inventive concept, the diffusion sheet OS1, the prism sheet OS2, and/or the protection sheet OS3 may include several folded sheets or may be omitted.

The reflection sheet RS may be disposed between the bottom surface LB of the light guide plate LGP and the containing member PQ. The reflection sheet RS may reflect light, which is leaked from the light guide plate LGP, back to the light guide plate LGP. However, embodiments of the inventive concept are not limited to this example, and for example, the reflection sheet RS may be omitted. For example, an optically reflective material, which is coated on the containing member PQ, may be used instead of the reflection sheet RS. Embodiments of the inventive concept are not limited to a specific material of the optically reflective material.

The mold frame MF may support the display panel DP. The mold frame MF may include an extended portion M1 and a supporting portion M2. The mold frame MF may be disposed between the display panel DP and the backlight unit BLU. In FIG. 1B, the dotted line indicates a region of the mold frame MF, which is overlapped with the non-display region NDA of the display panel DP.

The extended portion M1 may be extended in the thickness direction of the display panel DP or in the third direction DR3 and may at least partially overlap the non-display region NDA. The extended portion M1 may be in contact with the top chassis TC. A side surface of the extended portion M1 may include a side surface MS of the mold frame MF.

The supporting portion M2 may extend horizontally from the extended portion M1 to define an opening OP and may include a containing hole HM. The supporting portion M2 may be extended from the extended portion M1 in a direction from the non-display region NDA toward the display panel DP, when viewed in a plan view. A top surface of the supporting portion M2 may include a top surface MU of the mold frame MF. Hence, the extended portion M1 may form the sidewalls of the mold frame MF, and the supporting portion M2 may form the top surface (i.e. the surface facing the display panel DP), with the supporting portion M2 defining the opening OP.

The opening OP of the mold frame MF may at least partially overlap the display region DA, when viewed in a plan view. Accordingly, light, which is provided from the light guide plate LGP through the opening OP, may be transmitted to the display panel DP.

The containing hole HM may be configured to contain the guide member GM, which is attached to a bottom surface of the display panel DP. Thus, a shape of the containing hole HM may correspond to a shape of the guide member GM. The containing hole HM may penetrate the top surface MU of the mold frame MF. The top surface MU may be defined as a surface in contact with the rear surface PB of the display panel DP. The containing hole HM may be formed by recessing at least a portion of the top surface MU.

The guide member GM may be disposed on the rear surface PB of the display panel DP. The guide member GM may be coupled to a region of the rear surface PB overlapped with the non-display region NDA. In an exemplary embodiment of the present inventive concept, the guide member GM may be rigid. For example, the guide member GM may be formed of or may otherwise include at least of plastic and metallic materials.

An adhesive member IL may be disposed between the rear surface PB of the display panel DP and the guide member GM. The adhesive member IL may attach the guide member GM to the display panel DP. The adhesive member IL may be an adhesive material including polymer resins (e.g., polyvinyl chloride, polyethylene, polystyrene, polypropylene, and/or polyvinylidene chloride). However, the embodiments of inventive concept are not limited to this example, and for example, any material may be used for the adhesive member IL, as long as it can be used to attach the guide member GM to the display panel DP.

In an exemplary embodiment of the present inventive concept, the guide member GM may be more rigid than the adhesive member IL. The guide member GM may be coupled to the containing hole HM and may stably fix the display panel DP to the mold frame MF. The guide member GM, which is coupled to the display panel DP, may be coupled to the containing hole HM to be in contact with the mold frame MF. Accordingly, an impact-resistance strength of the display device DD may be increased.

FIG. 3A is an exploded perspective view illustrating some elements of a display device according to an exemplary embodiment of the present inventive concept. FIG. 3B is an exploded perspective view illustrating some elements of a display device according to an exemplary embodiment of the present inventive concept. For concise description, an element previously described with reference to FIGS. 1A, 1B, 1C, and 2 may be identified by the same reference number without repeating an overlapping description thereof. For convenience in illustration, the display panel DP is illustrated to be separated from the mold frame MF, as depicted by a dotted line. The dotted line is illustrated to indicate a region of the mold frame MF, which is overlapped with the non-display region NDA of the display panel DP.

In an exemplary embodiment of the present inventive concept, a plurality of the containing holes HM may be provided. The containing holes HM may include, for example, containing holes HM1 and HM2, and the guide member GM may be disposed in each of the containing holes HM1 and HM2. The containing holes HM may be spaced apart from each other along an edge of the opening OP. For example, as shown in FIG. 3A, a pair of the containing holes HM1 and HM2 may be disposed near each corner of the opening OP. The guide member GM may be coupled to each of the containing holes HM1 and HM2 and may at least partially overlap each of the containing holes HM1 and HM2, when viewed in a plan view.

The display panel DP may be coupled to the guide member GM, and the guide member GM may be coupled to the containing hole HM, which is formed in the top surface MU of the mold frame MF. Thus, the display panel DP may be stably coupled to the mold frame MF to prevent or suppress the display panel DP from being damaged by an impact, such as may occur when the display device DD (e.g., see FIG. 1B) is transported, contained, or stored.

Referring to FIG. 3B, for example, even when there is undesired motion in the second direction DR2 (hereinafter, a first slip SH1) of the display device DD during its transportation, containing, or storing process, the display panel DP may be stably coupled to the mold frame MF by the first guide member Hi. Furthermore, even when there is undesired motion in a direction crossing the direction of the first slip SH1 (hereinafter, a second slip SH2), the second guide member H2 may allow the display panel DP to be stably coupled to the mold frame MF.

In an exemplary embodiment of the present inventive concept, the guide member GM might not be coupled to some of the side surfaces of the display panel DP (e.g., to the side surfaces S1 and S2 adjacent to the driving circuit DB). For example, the guide member GM may be placed on the rear surface PB of the display panel DP. This may make it possible to prevent undesired interference between the guide member GM and the driving circuit DB.

FIGS. 4A to 4E are cross-sectional views each illustrating some elements of a display device according to an exemplary embodiment of the present inventive concept. For concise description, an element previously described with reference to FIGS. 1A, 1B, 1C, 2, 3A, and 3B may be identified by the same reference number without repeating an overlapping description thereof.

Referring to FIG. 4A, a containing hole HM-A may be disposed in a mold frame MF-A. Unlike that shown in FIG. 2, a depth TH1 in the third direction DR3 of the containing hole HM-A may be larger than a sum of a thickness TH2 of an adhesive member IL-A and a thickness TH3 of a guide member GM-A. In the present embodiment, even when the guide member GM-A is coupled to the containing hole HM-A, a separation space TH4 may be formed between the containing hole HM-A and the guide member GM-A. For example, a top surface HM-U of the containing hole HM-A might not be in contact with the guide member GM-A. For example, the top surface HM-U of the containing hole HM-A may be spaced apart from and exposed to the guide member GM-A.

Referring to FIG. 4B, an adhesive member IL-B may include adhesive members IL1 and IL2. For example, unlike that shown in FIG. 4A, the adhesive member IL-B of FIG. 4B may further include an additional adhesive member IL2, which attaches a guide member GM-B to a mold frame MF-B. The additional adhesive member IL2 may cover a top surface HM-U (e.g., see FIG. 4A) of a containing hole HM-B. The additional adhesive member IL2 may be provided in a space corresponding to the separation space TH4 of FIG. 4A and may attach the guide member GM-B to the mold frame MF-B. Since the adhesive members IL1 and IL2 are used to couple a display panel DP-B to the mold frame MF-B, it may be possible to increase an impact-resistance strength of the display device.

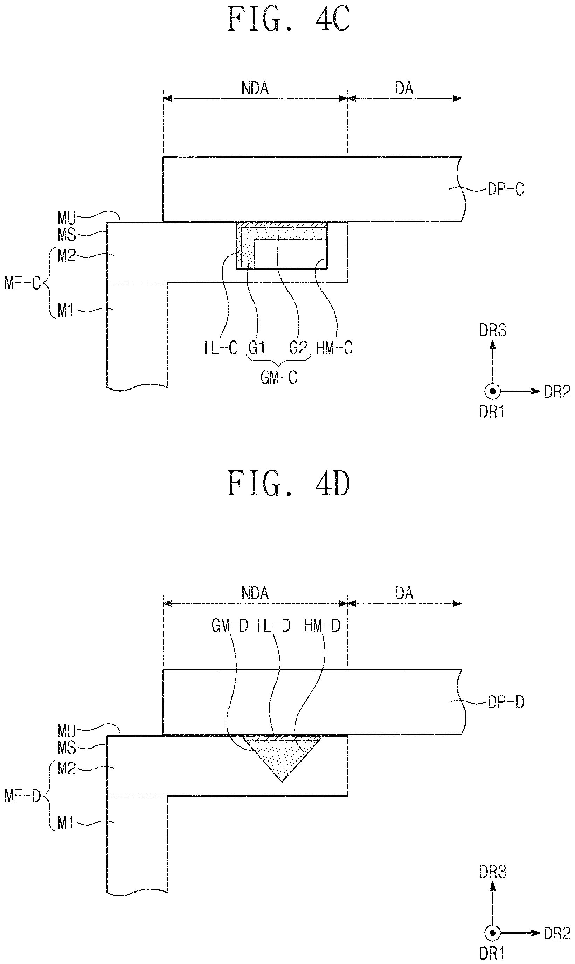

Referring to FIG. 4C, unlike the rectangular sectional structure of the guide member GM-A shown in FIG. 4A, a guide member GM-C according to the present embodiment, may include a first guide portion G1, which is extended in the third direction DR3, and a second guide portion G2, which is extended from the first guide portion G1 in a direction different from an extension direction of the first guide portion G1. In the present embodiment, an adhesive member IL-C may cover the first guide portion G1 and the second guide portion G2. Thus, a display panel DP-C and the guide member GM-C may be coupled to each other by the adhesive member IL-C. The guide member GM-C may effectively prevent a relative movement, e.g., in the second direction DR2, between the display panel DP-C and the guide member GM-C, and thereby increase the reliability of a display device. However, embodiments of the inventive concept are not limited to this example, and in an exemplary embodiment of the present inventive concept, a position of the guide member GM-C may be variously changed to prevent the relative movement in various directions.

Referring to FIG. 4D, a guide member GM-D may have a polygonal shape, when viewed in a cross-sectional view. For example, the guide member GM-D may have a triangular section, as shown in FIG. 4D. A containing hole HM-D may be disposed in a mold frame MF-D. In the present embodiment, the containing hole HM-D may have a triangular cross-section corresponding to the shape of the guide member GM-D. However, embodiments of the inventive concept are not limited to this example, and for example, the shape of the containing hole HM-D may be variously changed to correspond to the polygonal shape of the guide member GM-D.

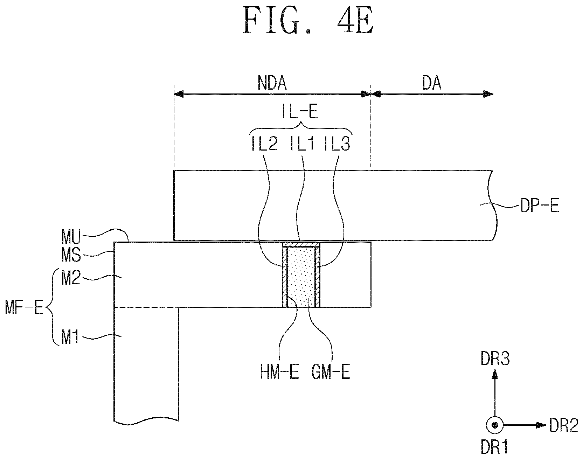

Referring to FIG. 4E, unlike that shown in FIG. 2, a containing hole HM-E may be formed to penetrate the supporting portion M2. In an exemplary embodiment of the present inventive concept, a guide member GM-E may be placed in the containing hole HM-E. The guide member GM-E may be attached to a display panel DP-E and a mold frame MF-E by an adhesive member IL-E. For example, the guide member GM-E may be attached to the display panel DP-E by a first adhesive member IL1 and may be attached to the mold frame MF-E by second and third adhesive members IL2 and IL3. In FIG. 4E, an end of the guide member GM-E exposed by the containing hole HM-E is illustrated as being coplanar with the supporting portion M2, but embodiments of the inventive concept are not limited thereto. For example, the end of the guide member GM-E may have a structure protruding from the supporting portion M2. Furthermore, the second and third adhesive members IL2 and IL3 may be omitted, but embodiments of the inventive concept are not limited thereto.

FIG. 5A is a cross-sectional view illustrating some elements of a display device according to an exemplary embodiment of the present inventive concept. FIG. 5B is an enlarged view illustrating a portion of FIG. 5A. For concise description, an element previously described with reference to FIGS. 1A, 1B, 1C, 2, 3A, and 3B may be identified by the same reference number without repeating an overlapping description thereof.

Referring to FIG. 5A, a guide member GM-F, according to an exemplary embodiment of the present inventive concept, may include the first guide portion G1 and the second guide portion G2. The first guide portion G1 may be extended in the third direction DR3 and may include a surface, which is used as a side surface GS of the guide member GM-F.

The second guide portion G2 may be extended in the second direction DR2 from the first guide portion G1. A top surface of the second guide portion G2 may include a top surface GU of the guide member GM-F. A portion of the second guide portion G2 may be exposed by a display panel DP-F.

In an exemplary embodiment of the present inventive concept, the top surface GU of the guide member GM-F may be coplanar with a top surface MU of a mold frame MF-F, and the side surface GS of the guide member GM-F may be coplanar with the side surface GS of the mold frame MF-F.

Referring to FIG. 5B, a containing hole HM-F may have a shape corresponding to the shape of the guide member GM-F. For example, the containing hole HM-F may be formed by partially recessing the top surface MU of the supporting portion M2 and the side surface MS of the extended portion M1, which are connected to each other along a corner of the mold frame MF-F.

An adhesive member IL-F may include the first adhesive member IL1 and the second adhesive member IL2. The first adhesive member IL1 may couple the guide member GM-F to the display panel DP-F. The first adhesive member IL1 may cover a region of the top surface GU of the guide member GM-F covered with the display panel DP-F. The second adhesive member IL2 may couple the guide member GM-F to the containing hole HM-F. Thus, the display panel DP-F and the mold frame MF-F may be coupled to each other by the adhesive member IL-F.

FIG. 6 is a perspective view illustrating some elements of a display device according to an exemplary embodiment of the present inventive concept. For concise description, an element previously described with reference to FIGS. 1A, 1B, 1C, 2, 3A, and 3B may be identified by the same reference number without repeating an overlapping description thereof.

In an exemplary embodiment of the present inventive concept, a containing hole HM-1 may have a closed line shape enclosing the opening OP. The containing hole HM-1 may at least partially overlap the non-display region NDA, when viewed in a plan view.

In an exemplary embodiment of the present inventive concept, a guide member GM-1 may have a shape corresponding to the shape of the containing hole HM-1 or may have a closed line shape. Thus, it may be possible to more effectively prevent slipping, which may occur when the display device DD (e.g., see FIG. 1A) is being transported, contained, or stored, and thereby to increase reliability of the display device DD.

According to an exemplary embodiment of the present inventive concept, a guide member and an adhesive member may couple a mold frame with a display module. The guide member may be configured to have a higher rigidity than the adhesive member, and thus, the mold frame and the display panel may be stably coupled with each other.

As discussed, embodiments of the invention can provide a display device, comprising: a display panel including a display region and a non-display region adjacent to the display region, the display panel including a pixel disposed within the display region; a backlight unit configured to provide light to the display panel; a mold frame disposed between the display panel and the backlight unit, the mold frame supporting the display panel, the mold frame including: a supporting portion defining an opening at least partially overlapping the display region, and comprising a containing hole; a guide member disposed between the display panel and the mold frame; and an adhesive member attaching the guide member to the display panel, wherein the guide member is disposed within the containing hole and is more rigid than the adhesive member. The supporting portion may support the display panel.

In some embodiments, the mold frame comprises an extended portion at least partially overlapping the non-display region, wherein the supporting portion extends from the extended portion. The extended portion may form the sidewalls of the mold frame, and the supporting portion may form the top surface of the mold frame (i.e. the surface facing the display panel), with the supporting portion defining the opening.

The containing hole may be defined in a top surface of the supporting portion in contact with the display panel, and wherein the containing hole at least partially penetrates a top surface of the supporting portion that is in contact with the display panel. The containing hole may be formed as a recess or groove in the supporting portion.

The containing hole may have a shape corresponding to a shape of the guide member.

The guide member and the containing hole may each provided in plural, and the containing holes may be spaced apart from each other an edge of the opening. The containing holes may be arranged so that the plurality of contact holes surround the opening.

Embodiments of the invention can also provide a display device, comprising: a display module including a display panel and a driving circuit, the display panel including a display region and a non-display region adjacent to the display region, the driving circuit being connected to a side region of the display panel; a mold frame at least partially overlapping the non-display region and supporting the display module, the mold frame including a containing hole facing the display panel; and a guide member coupled to the display panel, wherein the guide member is disposed within the containing hole and is at least partially overlapped by the driving circuit.

While exemplary embodiments of the present inventive concepts have been particularly shown and described, it will be understood by one of ordinary skill in the art that variations in form and detail may be made therein without departing from the scope of the present disclosure.

## Claims

1. A display device, comprising:
a display panel including a display region and a non-display region adjacent to the display region, the display panel including a pixel disposed within the display region;
a backlight unit configured to provide light to the display panel;
a mold frame disposed between the display panel and the backlight unit, the mold frame supporting the display panel, the mold frame including:
a supporting portion defining an opening at least partially overlapping the display region, and
a containing hole;
a guide member disposed between the display panel and the mold frame; and
an adhesive member attaching the guide member to the display panel,
wherein the guide member is disposed within the containing hole and is more rigid than the adhesive member.

2. The display device of claim 1, wherein the mold frame comprises an extended portion at least partially overlapping the non-display region, wherein the supporting portion extends from the extended portion.

3. The display device of claim 1 or 2, wherein the guide member includes at least of metallic and plastic materials.

4. The display device of any one of claims 1 to 3, wherein the containing hole is defined in a top surface of the supporting portion in contact with the display panel, and
wherein the containing hole partially penetrates a top surface of the supporting portion that is in contact with the display panel;
optionally wherein the containing hole has a shape corresponding to a shape of the guide member.

5. The display device of any one of claims 1 to 4, wherein the guide member and the containing hole are each provided in plural, and
wherein the containing holes are spaced apart from each other an edge of the opening;
optionally wherein the containing holes surround the opening.

6. The display device of any one of claims 1 to 5, wherein the containing hole has a closed line shape;
optionally wherein the guide member has a shape corresponding to the closed line shape of the containing hole;
optionally wherein the guide member has a polygonal shape.

7. The display device of any one of claims 1 to 6, wherein the guide member includes a first guide portion, which is extended in a thickness direction of the display panel, and a second guide portion, which is extended from the first guide portion in a direction parallel to a top surface of the display panel, and
wherein the adhesive member couples the second guide portion to the display panel.

8. The display device of any one of claims 1 to 7, wherein a depth of the containing hole is larger than or equal to a sum of thicknesses of the adhesive member and the guide member;
optionally further comprising an additional adhesive member coupling the guide member to the supporting portion, wherein the depth of the containing hole is larger than a sum of thicknesses of the adhesive member and the guide member, and the additional adhesive member is disposed within a separation space between the adhesive member and the supporting portion.

9. The display device of any one of claims 1 to 8, wherein the display panel includes a first substrate, a second substrate, and a liquid crystal layer disposed between the first substrate and the second substrate, and
wherein the adhesive member attaches the second substrate to the guide member.

10. The display device of any one of claims 1 to 9, further comprising a top chassis at least partially covering the non-display region of the display panel and the extended portion.

11. The display device of any one of claims 1 to 10, wherein the backlight unit includes:
a light guide plate including an incidence surface;
a light source structure including a circuit substrate and a light source, which is disposed on and electrically connected to the circuit substrate and is configured to emit light toward the incidence surface; and
a containing member coupled to the circuit substrate and supporting the light guide plate;
optionally further comprising a reflection sheet disposed between the light guide plate and the containing member.

12. The display device of any one of claims 1 to 11, wherein the containing hole is formed by partially recessing a top surface of the supporting portion, which is in contact with the display panel, and by partially recessing a side surface of the extended portion, which is connected to the top surface of the supporting portion,
wherein a top surface of the guide member in contact with the display panel is substantially coplanar with the top surface of the supporting portion, and
wherein a side surface of the guide member is substantially coplanar with a side surface of the supporting portion.

13. The display device of any one of claims 1 to 11, wherein the containing hole penetrates the supporting portion;
optionally further comprising an additional adhesive member interposed between the containing hole and the supporting portion, wherein the additional adhesive member attaches the mold frame to the supporting portion.

14. A display device, comprising:
a display module including a display panel and a driving circuit, the display panel including a display region and a non-display region adjacent to the display region, the driving circuit being connected to a side region of the display panel;
a mold frame at least partially overlapping the non-display region and supporting the display module, the mold frame including a containing hole facing the display panel; and
a guide member coupled to the display panel,
wherein the guide member is disposed within the containing hole and is at least partially overlapped by the driving circuit.

15. The display device of claim 14, wherein the guide member includes at least of metallic and plastic materials; and/or
wherein the driving circuit comprises a circuit substrate, and a circuit film, which electrically connect the display panel to the circuit substrate, wherein the circuit film is flexible, and wherein the guide member and the circuit film are coupled to different surfaces of the display panel; and/or
further comprising an additional guide member spaced apart from the guide member, wherein the additional guide member does not overlap the driving circuit.
